(19) Europäisches Patentamt
European Patent Office
Office européen des brevets

(11) Publication number: 0 241 171 A2

(12) # EUROPEAN PATENT APPLICATION

(21) Application number: 87302413.7

(22) Date of filing: 20.03.87

(51) Int. Cl.³: G 02 B 6/28

(30) Priority: 24.03.86 GB 8607286
04.07.86 GB 8616387

(43) Date of publication of application:
14.10.87 Bulletin 87/42

(84) Designated Contracting States:
DE FR NL SE

(71) Applicant: The General Electric Company, p.l.c.
1 Stanhope Gate
London W1A 1EH(GB)

(72) Inventor: Georgiou, George Antony
45 Oakwood Avenue
Southgate London N14 6QH(GB)

(74) Representative: MacKenzie, Ian Alastair Robert
The General Electric Company, p.l.c. Central Patent Department Wembley Office Hirst Research Center East Lane
Wembley Middlesex HA9 7PP(GB)

(54) **Optical couplers.**

(57) The invention concerns a method of fabricating an NxN optical coupler where N is at least equal to 4, the method being characterised in that it comprises the steps of locating two pairs of optical fibres (1, 2, 4, 5) side by side, applying simultaneous tension and heat to the fibres so as to generate a biconical taper in the fibres so located, and to cause the fibres of each pair to fuse together to form two couplers, displacing one fibre of each pair so that each displaced fibre lies in the position vacated by the other fibre, and generating a second biconical layer in the rearranged fibres so as to fabricate two further couplers.

Fig.1.

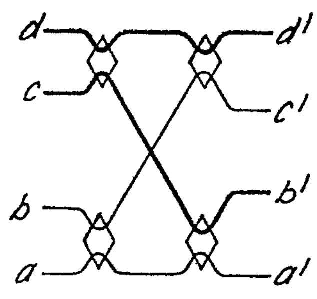


EP 0 241 171 A2

Croydon Printing Company Ltd.

# Optical Couplers

The present invention concerns fibre optic couplers.

It is well known to fabricate fibre optical couplers by a process which involves stripping the primary coating from a short length of a fibre optic, clamping the fibre in a motorised pulling arrangement so that the stripped portion can be stretched, and then heating the stripped portion whilst stretching the fibre. This action results in a bi-conical taper and by launching light of a specified wavelength from one end of the fibre and monitoring the light emitted at the other end a coupler can be produced the characteristics of which are dependent on the degree of the treatment. The basic principles involved in fabricating fibre optic couplers of this kind are disclosed in our copending U.K. Patent Application No. 8519086, the contents of which are hereby incorporated in the present specification.

Problems arise when it is wished to fabricate single mode optic couplers of this type which have four or more input ports and four or more output ports.

In particular it can be shown that the maximum number n of fibres which can be fused together to produce 1xn equal power splitter is 3, giving a 3x3 coupler. To fabricate couplers which have more than 3x3 inputs and outputs it is possible to cascade a number of 2x2 or 3x3 couplers. This, however, is very tedious, time consuming and expensive. The resultant coupler cannot be accomodated in a small space.

The present invention has for an object to provide a method of fabricating fibre-optic couplers of the type having at least 4 input and at least 4 output ports which is simpler than the above described process.

Accordingly from one aspect the present invention consists in a method of fabricating an NxN optical coupler where N is at least equal to 4, the method comprising the steps of locating two pairs of monomode optical fibres side by side, applying simultaneous tension and heat to the fibres so as to generate a biconical taper in the fibres so located and to cause the fibres of each pair to fuse together to form two couplers, displacing one fibre of each pair so that each displaced fibre lies in the position vacated by the other fibre, and generating a second biconical taper in the rearranged fibres so as to fabricate two further couplers.

The invention also consists in an optical coupler fabricated as aforesaid, and in an optical instrument such as an optical gyroscope incorporating such an optical coupler.

A still further application of the invention lies in the fabrication of N channel multiplexer/demultiplexers.

In order that the present invention may be more readily understood, an embodiment thereof will now be described by way of example and with reference to the accompanying drawings,in which:

Figure 1 is a diagrammatic view of a single mode 4x4 optic coupler,

Figure 2 is a diagrammatic plan view showing an early stage in the fabrication of a 4x4 optic coupler,

Figure 3a, b and c show successive stages in the fabrication of a 4x4 optic coupler,

Figure 4 is a diagram of a fibre optic gyroscope incorporating a 4x4 optic coupler,

Figure 5 is a diagrammatic view of a 4 channel demultiplexer,

Figure 6 is a graph showing spectral responses,

Figure 7 is a more detailed view, and two cross sections of the multiplexer of Figure 5,

Figure 8 shows three steps in manufacturing a 4x4 coupler fabricated without the use of a dummy fibre,

Figure 9 shows such a 4x4 coupler,

Figure 10 shows an optical sensor manufactured using the techniques of Figures 8 and 9,

Figure 11 shows how the sensor of Figure 10 can be manufactured, and

Figure 12 is a view of the fibres making up the sensor of Figure 10.

Referring now to the accompanying drawings the optical coupler shown in Figure 1 has four input ports a, b, c and d, respectively coupled by monomode optical fibres to form output ports a', b', c' and d'. This coupler is fabricated in the following manner. Five fibres 1 to 5 are stripped of their primary coating for a length of about 90mm. The fibres are placed side by side as is shown in the plan view of Figure 2 and are held by a pair of clamps 6 and 7, the clamps being formed with respective grooves 8 and 9 in which the fibres lie. The outer fibres 1, 2, 3 and 4 are all 8μm/125μm monomode optical waveguides whilst fibre 5 is a 125μm diameter silica rod.

The area marked 10 is then heated with an oxybutane torch and the motorised clamps 6 and 7 driven away from one another so that the clamped portion is simultaneously heated and stretched. Whilst this is done optical power at a selected wavelength is injected into the left-hand ends of fibres 1 and 5 and monitored by suitable known detection equipment at the other, right-hand, ends of fibres 1, 2, 4 and 5. When the outputs of the four monitored fibres are identical the motorised pulling stages are stopped and the heat removed. The result of this operation is shown in Figure 3a and consists of two couplers in parallel. As will now be appreciated the fibre 3 is a dummy fibre which serves as extra cladding material between the two parallel couplers and also serves to isolate them electro-mechanically.

The next step in the fabrication of a 4x4 coupler is shown in Figure 3b. Fibres 2 and 4 are crossed over dummy fibre 3 so that the numbering sequence of the fibres changes from 1, 2, 3, 4, 5 to 1, 4, 3, 2, 5. The new arrangement is then reclamped in the clamps 6 and 7 of the motorised pulling arrangement. If at this time light is launched down fibre 1 the outputs of fibres 1 and 2 would read the same power whilst the outputs of fibres 4 and 5 would read zero power.

The heating and stretching process is begun and during the process optical power is injected only into fibre 1 whilst the outputs of fibres 1, 2, 4 and 5 are simultaneously monitored. In this case the tapering process is stopped when all the fibre outputs read identically. The result is that two further couplers have been created which are again isolated from one another by the dummy fibre. Light launched down any one of the four input ports is distributed amongst the free output ports.

A 4x4 coupler has many potential applications. One such application is in the manufacture of an optically modulated fibre-optic gyroscope. Such a gyroscope is shown diagrammatically in Figure 4.

In the gyroscope of Figure 4 light is launched via input 50 and is split into two at the first coupler 51. The light is then directed into an N-turn fibre-optic coil 52 so that two coherent beams travel around coil 52 in opposite directions. The two initial beams from coupler 51 are indicated by arrows A. The beams emerge from the coil 52 and are respectively split by couplers 53, 54 and via coupler sections 51 and 55 emerge from the outputs 56, 57 and 58. Input 50 does not function both as an input and as an output. Outputs 56 and 57 are secondary outputs where the path difference between the lengths of coupler 54 to coupler 55 and coupler 53 to coupler 55 determine how the device is biased.

For sensitive detection a path difference of $\frac{\pi}{2}$ is required. It is another advantage of the coupler structure according to the present invention that such a path difference can be achieved with relative ease. It can be seen from Figure 3c that if the portion where the fibres 2 and 4 are crossed over the dummy fibre is stretched there will be a differential change between the path lengths of the straight fibres 1 and 5 and the angled fibres 2 and 4. Thus by imparting a small extension to the cross-over portion and monitoring the angle of light through the couplers the desired $\frac{\pi}{2}$ path difference can readily be achieved.

Whilst the foregoing description has been limited to a 4x4 coupler it will be appreciated that the use of one or more dummy fibres can be used in the fabrication of couplers having a greater number of inputs and outputs.

It will be appreciated that there are many other potential applications for nxn couplers where n is at least 4.

Couplers in which n is greater than 4 can be made in a manner analogous to that used to fabricate the 4x4 coupler.

Thus an NxN coupler can be fabricated using two or more dummy fibres. In each case the dummy fibre would provide separation between a pair of couplers formed as before by tapering, with each pair of separated couplers being linked by the process of moving the two active fibres adjacent the (each of the) dummy fibre(s) so that they cross over the dummy fibre.

Another use to which couplers constructed in accordance with the present invention can be put is as N-channel demultiplexer/multiplexers. Figure 5 shows an embodiment of a 4-channel demultiplexer. Light at four different wavelengths, 1280, 1295, 1310 and 1325nm is input at port 100. The four wavelengths are separated and respectively output through ports 101,102,103 and 104. The demultiplexer is made up of three coupling sections respectively indicated at 110,120 and 130. To provide the required demultiplexing function each of these individual coupler sections has to have the spectral response shown in Figure 6. The spectral response curves in this Figure have been given the same numbers as the coupler sections that they refer to. Thus in the embodiment shown in Figure 5 coupler 110 passes wavelengths of 1295 and 1325nm but couples 1280 and 1310nm. Coupler 120 passes 1310 to output port 102 and couples 1280nm to output port 101, whilst coupler 130 couples 1325 to output port 104 and passes 1295nm to output port 103. This combined action of the three coupler sections separates the simultaneously input wavelengths into their four constituent parts. In the embodiment of Figure 5 four single mode fibres 111,112,113 and 114 and two dummy fibres 115 and 116 are used. The manner in which they are arranged is shown in Figure 7 The first taper in the array of fibres is made as previously described to fabricate coupler section 110. The two outputs of coupler section 110 are then crossed over the dummy fibres as is shown in Figure 7. Another taper is then fabricated with the two coupler sections so formed kept electromagnetically isolated by the presence of the two dummy fibres.

The method of ensuring that each of the coupler sections has the desired spectral response is as follows.

If light at a specific wavelength is launched down one of a pair of parallel monomode fibres which are subjected to stretching and heating so that the two fibres fuse to provide a coupler it will be found that the output from one of the fibres will vary between maxima and minima as the stretching operation is carried out. At the same time the output of the other fibre will vary in a converse manner. This variation after a certain degree of stretching settles into a relatively steady beat with a fixed period. Thus by carrying out the tapering process until this degree of stretching has occurred, monitoring the output of one of the fibres and stopping the tapering process once the output has reached a maxima for a specific wavelength, it can be assumed that the output of the parallel, fused fibre will be at a minima for that wavelength. It is this reciprocal performance between the outputs of the two coupled fibres which enables the first coupling section 110 to be fabricated with the desired spectral response. The fabrication of coupler sections 120 and 130 employs a similar procedure but with the some additional factors to be taken into account. Because the coupler section 110 has already been fabricated the subsequent sections 120 and 130 cannot be given the required spectral response by launching light down the input port leading to section 110. Because of this the fabrication of coupler sections 120 and 130 involves launching light down what will eventually be the output ports. As previously mentioned coupler section 120 is arranged to couple 1280nm and pass 1310nm. To achieve this light at 1280 is launched down that output namely output 103, which is intended to give 1310nm as its output. This is the output of fibre 112. The intensity of the transmitted light at the output of fibre 111, that is the end 121 of fibre 111 remote from output port 101, is monitored during the tapering process.

As with coupler section 110 the tapering process is combined until the heat period of the light intensity oscillations has settled into a relatively fixed period. The tapering process is stopped when the output of light at 1280nm from fibre end 121 is at a maximum. As previously explained this means that the coupler section 120 will now couple light at 1280nm to output 101 and that the spectral responses shown in Figure 6 will ensure that light at 1310nm is passed to output port 102. Exactly the same procedure is carried out with the other two ports 103, 104. Thus during fabrication light at 1325 is launched into port 103 and monitored at 122 to produce a maxima at that port.

It is of course possible to carry out the converse operations with exactly the same results. Namely, when fabricating section 120 light at 1310nm could be launched at output port 101 and the tapering process stopped when the monitored output at 121 is at a minimum. This again ensures that coupling section 120 will pass light at 1310nm to output port 102. The only remaining problem of fabrication is the fact that the coupler sections 120, 130 have to be "out-of-phase" by ½ period to satisfy the response curves in Figure 6.

As the two coupler sections are fabricated simultaneously this involves imparting a very slight differential stretch to the two different sections. One way of achieving this is to tension the two sections by attaching the fibres to the circumference of separate wheels or pulleys which are driven in synchronism. However, one of the wheels is given a slightly greater diameter than the other so that the amount of stretch imparted per degree of rotation varies between the two wheels. The difference in diameter can be discovered empirically.

It will now be apparent that whilst the device of Figure 5 has been described as a demultiplexer taking its input at 100, the device is capable of functioning equally well as a multiplexer with ports 101, 102, 103 and 104 acting as inputs for separate wavelengths to be multiplexed, and input port 100 becoming the output port.

The previous description has been directed to producing fibre optic couplers using monomode fibres using one or more dummy fibres. The present invention can, however, be utilised with multimode fibres and without the necessity of using dummy fibres.

Taking again the example of a 4x4 coupler and referring to Figure 8 of the drawings it can be seen that at A four fibres 100, not necessarily mono-mode, have been laid side-by-side with twists indicated at 101 and 102. Heat is applied around the area of the twists 101 and 102 and the four fibres stretched to make two parallel couplers separated by an air gap, the previous twists having now become coupling sections. During this operation light is launched down the fibres and monitored as already described in this specification.

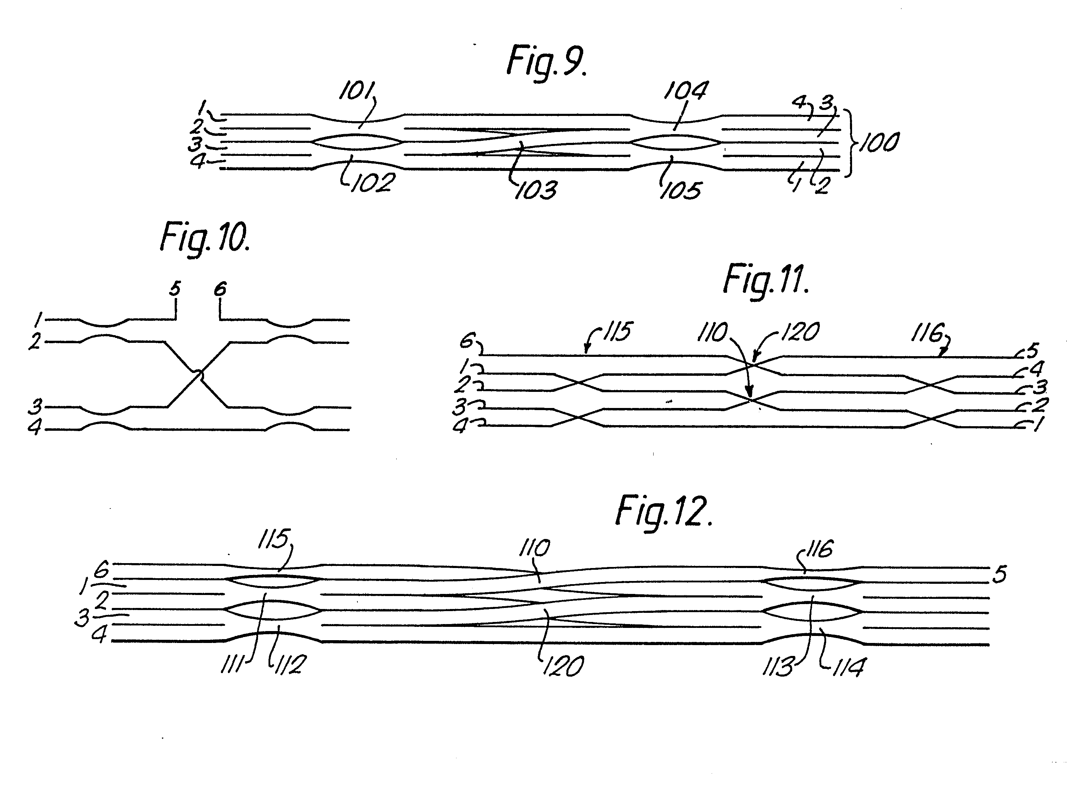

The next step is shown at B in Figure 8. The inner two fibres are crossed-over at 103. The final step is shown at C where the outer pairs of fibres are twisted over at 104 and 105 to make two further couplings. The air gap between the couplers is taken up by a potting medium when the device is finally packaged. Couplers fabricated in this manner can be utilised in the applications already described in this specification. Figure 9 shows the final, but unpotted, 4x4 coupler, with the coupling section shown as in Figure 8 at 101, 102, 104 and 105.

There is also a requirement for an optical sensor having the general configuration shown in Figure 10. The essential nature and advantages of such a sensor are fully discussed in a paper by I.P. Giles, S. McNeil and B. Culshaw in a paper entitled "A stable remote intensity based optical fibre sensor" in the journal of the Institute of Physics. However the main advantage is that the sensor is immune to changing fibre losses so that it is only the effect of the probe located between ends 5 and 6 which affects the measurement. This probe can be of any suitable type and can be responsive to temperature pressure as any other measurement. The fibre network which is the basis of the sensor is very similar to that described with regard to Figures 8 and 9 except that parts 5 and 6 are not connected. The way that this is achieved can be appreciated from Figures 11 and 12. An extra fibre is included and there are two cross-over points at 110 and 120. The coupling sections 111, 112, 113 and 114 correspond to the coupling sections of the 4x4 embodiment shown in Figure 9. Also present are low loss tapers 115 and 116 in the added fibre.

Figure 12 is a schematic view of the network shown in Figure 11.

CLAIMS

1. A method of fabricating an NxN optical coupler where N is at least equal to 4, the method being characterised in that it comprises the steps of locating two pairs of optical fibres side by side, applying simultaneous tension and heat to the fibres so as to generate a biconical taper in the fibres so located, and to cause the fibres of each pair to fuse together to form two couplers, displacing one fibre of each pair so that each displaced fibre lies in the position vacated by the other fibre, and generating a second biconical taper in the rearranged fibres so as to fabricate two further couplers.

2. A method as claimed in Claim 1, and characterised in that an air gap is maintained between the couplers so formed, and a potting compound is utilised to fill this air gap.

3. A method as claimed in Claim 1, and characterised in that each pair of fibres is separated by a dummy fibre.

4. A method as claimed in Claim 1 and characterised in that at least three pairs of fibres are provided, the fibres of each pair being coupled together, one fibre of each of the coupled pairs then being coupled with a fibre of another of the coupled pairs, and the process being repeated to provide an NxN coupler where N is greater than 4.

5. A method as claimed in Claim 3 and characterised in that at least three pairs of fibres are provided, the fibres of each pair being coupled together, one fibre of each of the coupled pairs then being coupled with a fibre of another of the coupled pairs, and the process being repeated to provide an NxN coupler where N is greater than 4.

6. An optical coupler characterised in that it is constructed in accordance with a method as claimed in any one of the preceding claims.

0241171

1/5

Fig. 1.

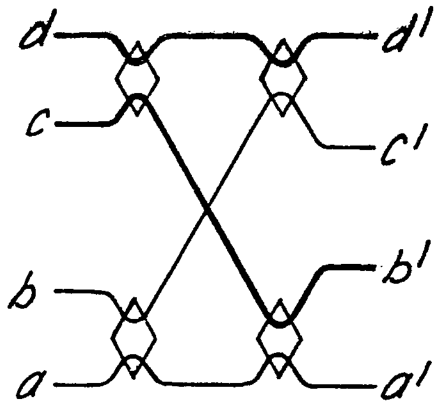


Fig. 2.

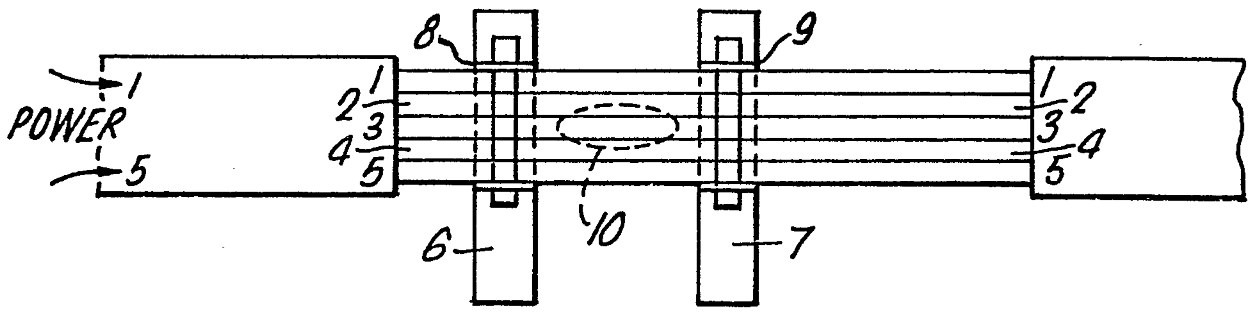


Fig. 3a.

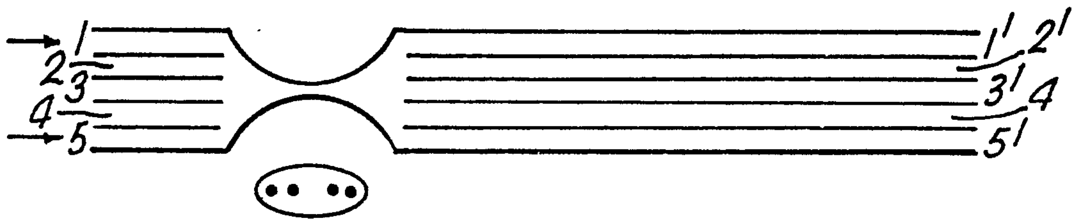


Fig. 3b.

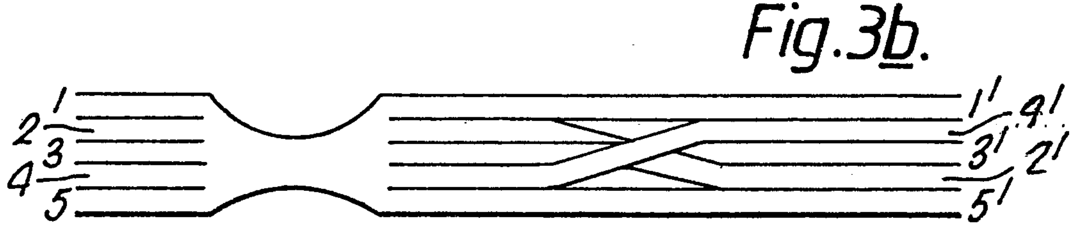


Fig. 3c.

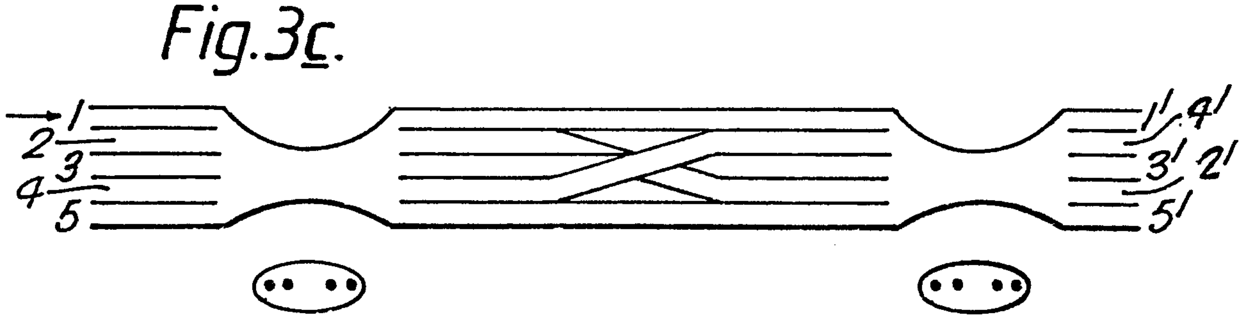

Fig.1.

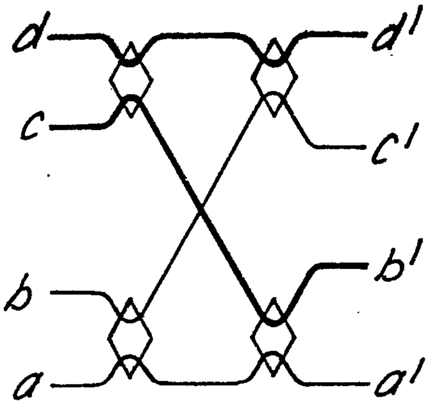


Fig. 2.

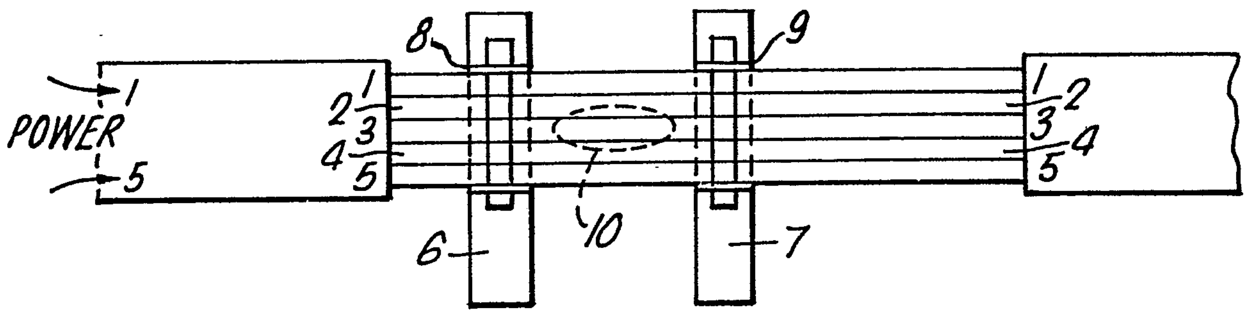


Fig.3a.

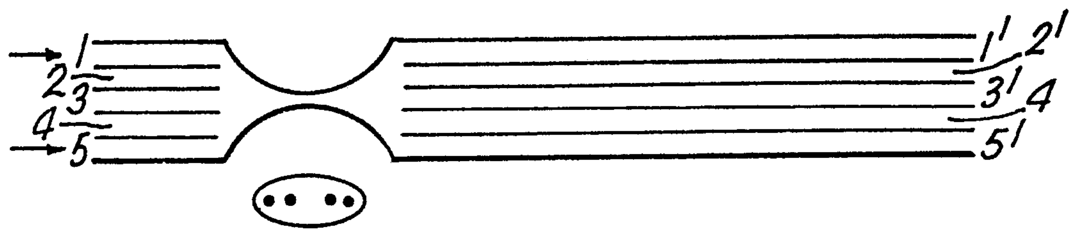


Fig.3b.

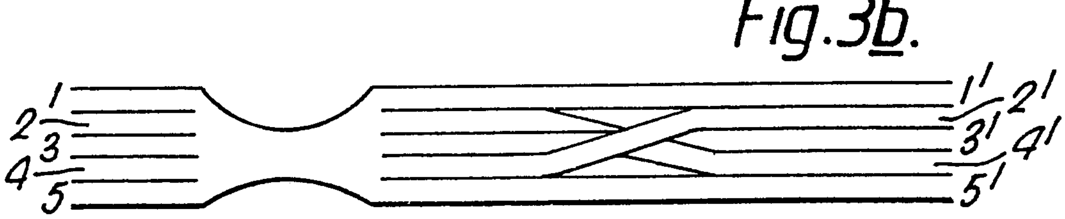


Fig.3c.

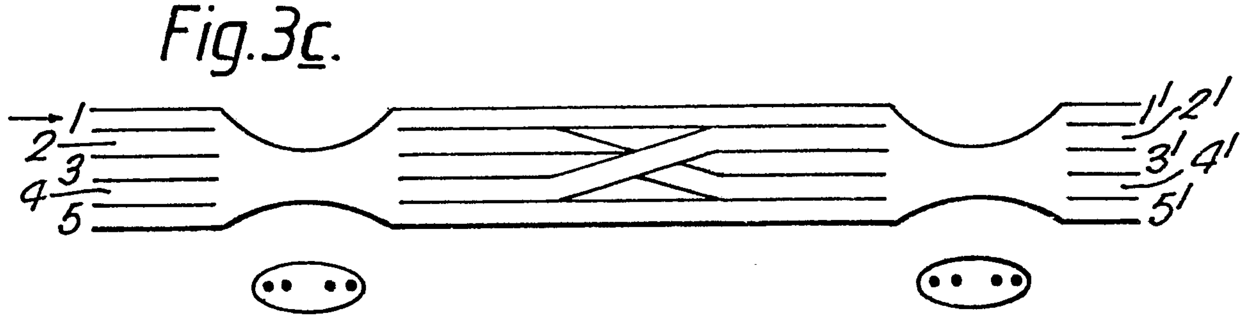

Fig.6.

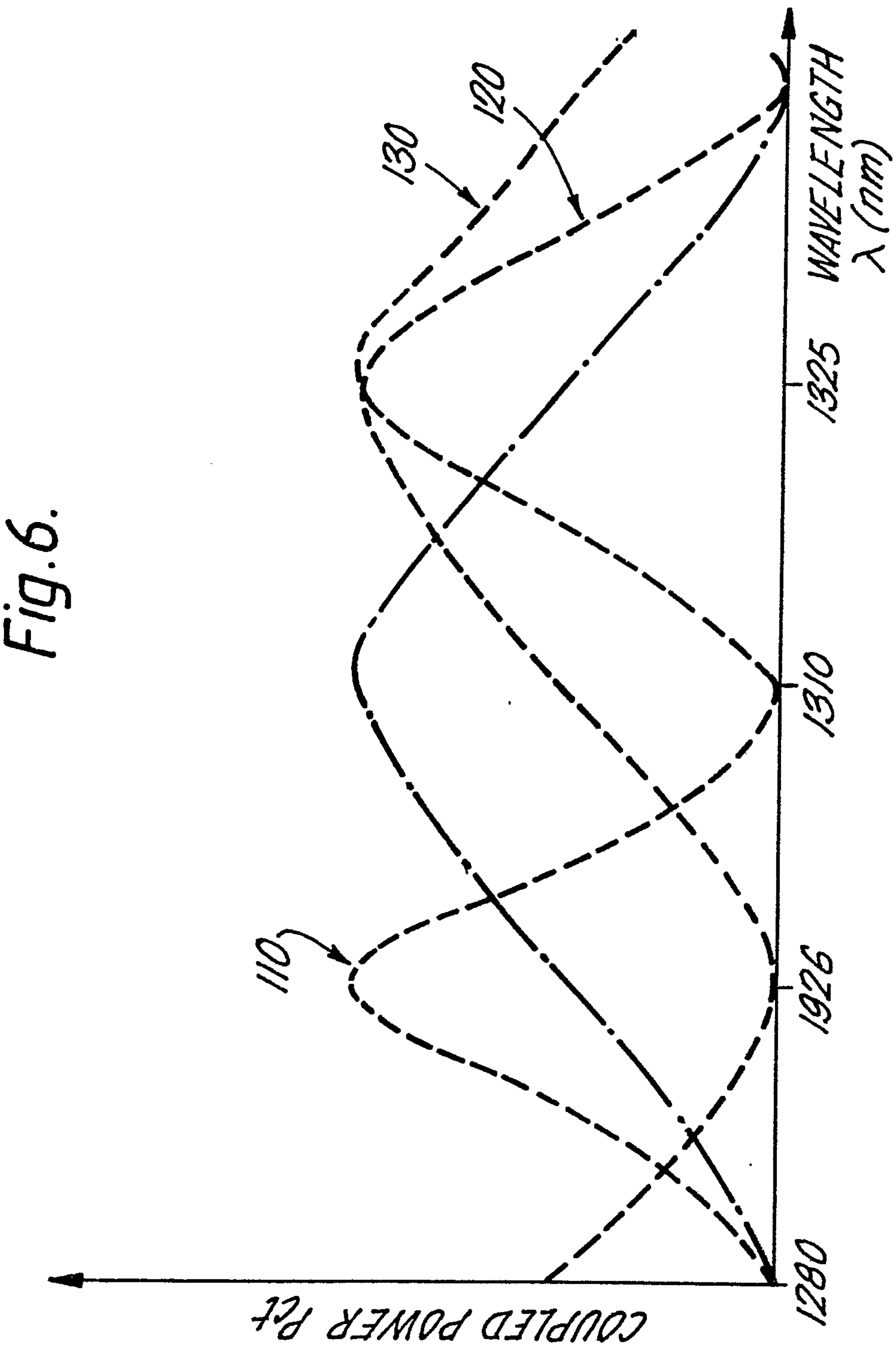
130
120
110
WAVELENGTH
λ (nm)
1280
1926
1310
1325
COUPLED POWER P2t

Fig. 7.

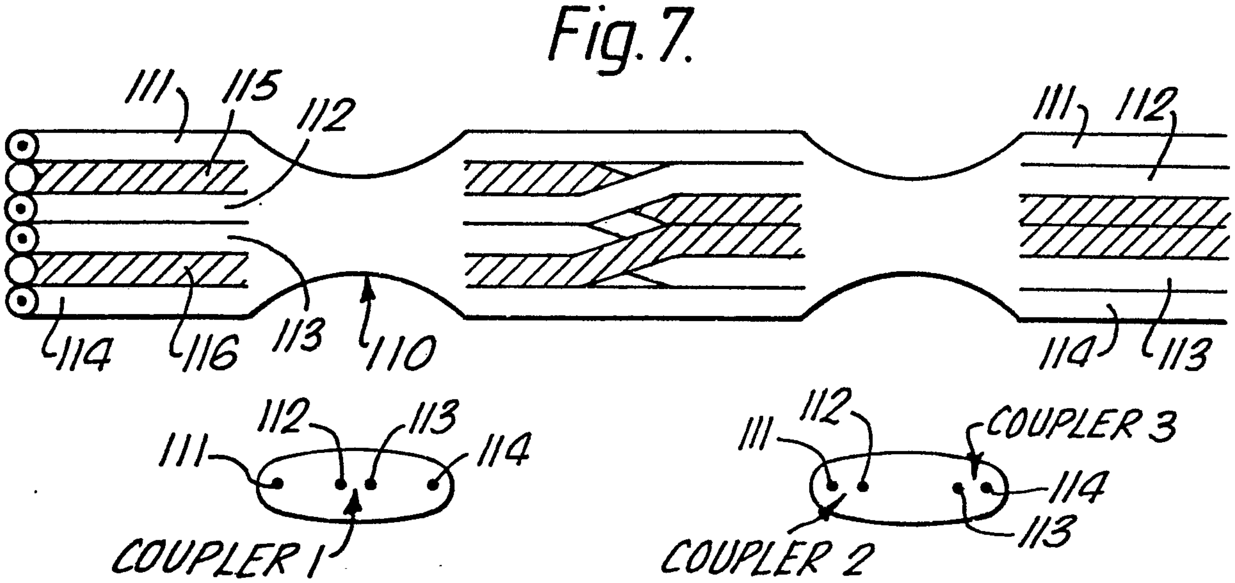
111
115
112
113
110
114
116
111
112
114
113
111
112
113
114
COUPLER 1
111
112
COUPLER 3
114
113
COUPLER 2

Fig. 8.

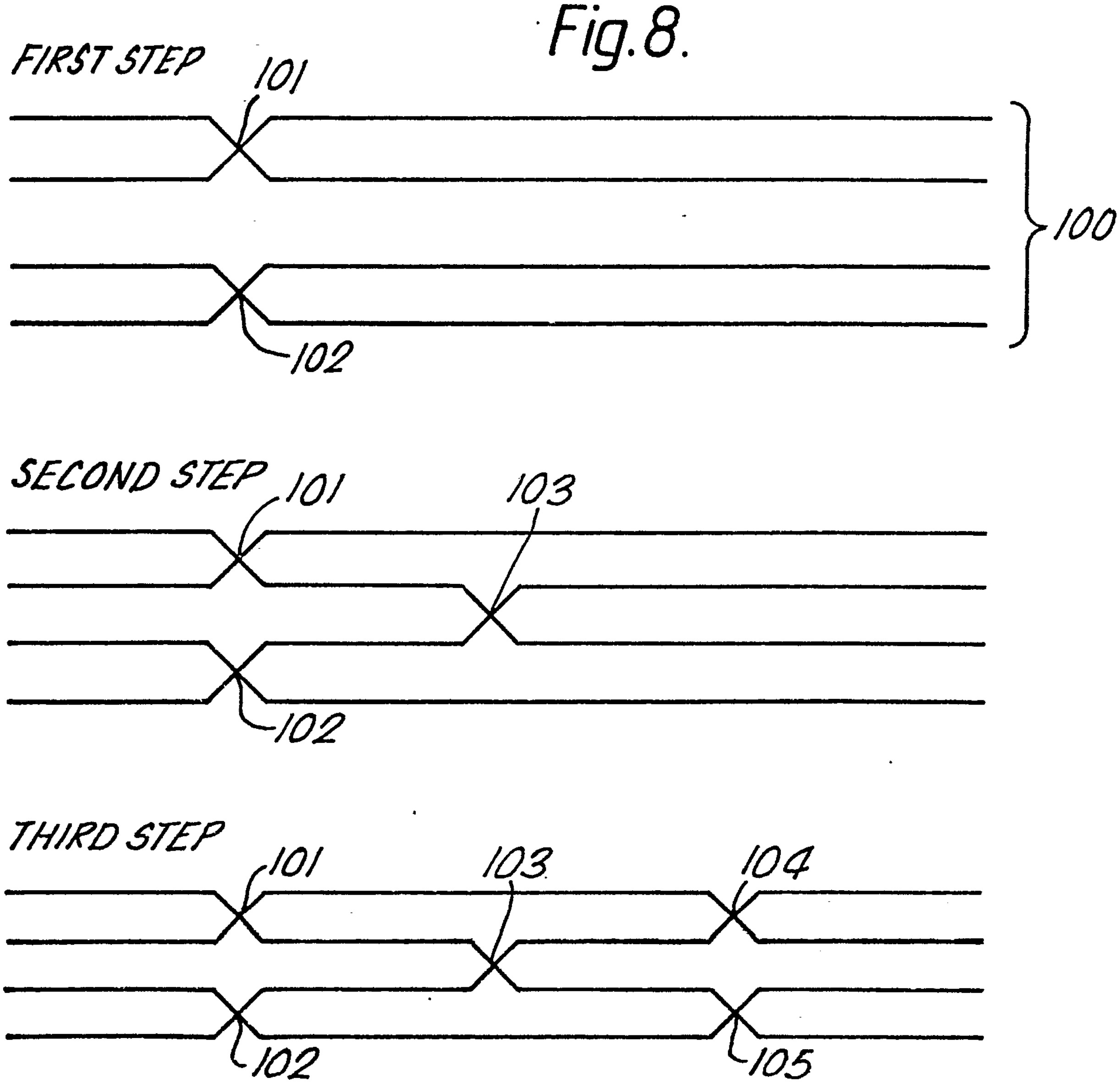
FIRST STEP
101
100
102
SECOND STEP
101
103
102
THIRD STEP
101
103
104
102
105

Fig.9.

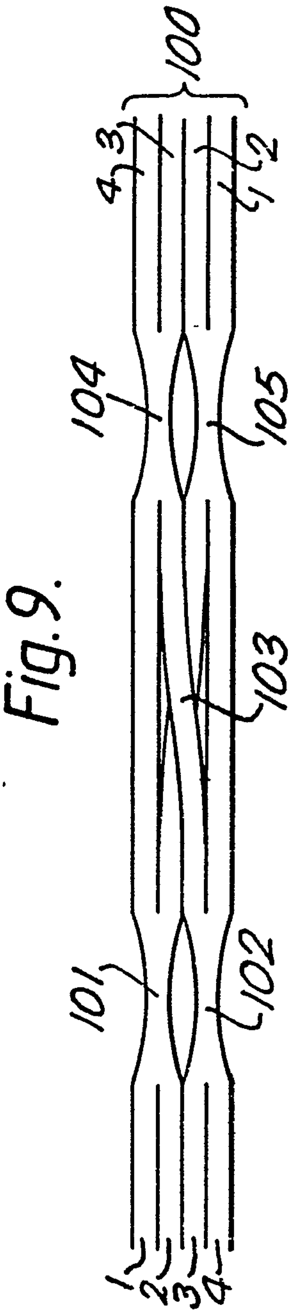


Fig.10.

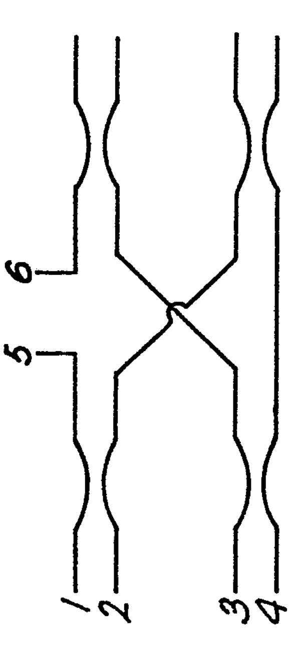


Fig.11.

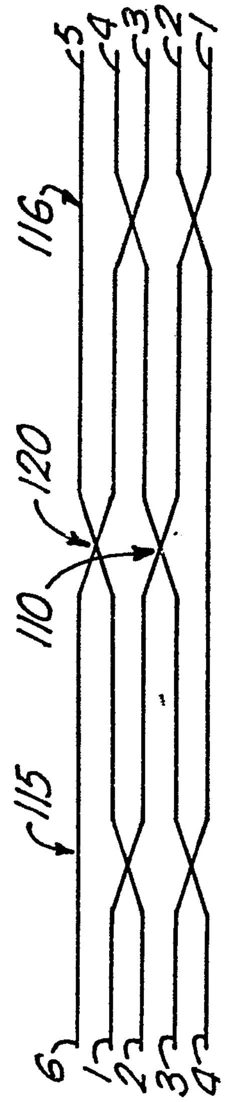


Fig.12.